# FASCICULE DE BREVET EUROPEEN

(11) **EP 0 618 133 B1**
(45) Date de publication et mention de la délivrance du brevet: **28.05.1997**
(21) Numéro de dépôt: 94400680.8
(22) Date de dépôt: 30.03.1994
(51) Int. Cl.: B64G 1/58, F16C 11/06

(54) **Dispositif de protection thermique notamment pour engin aérospatial**
Wärmeschutzvorrichtung, insbesondere für Raumfahrzeuge
Thermal protection device, particularly for spacecraft

(30) Priorité: 01.04.1993 FR 9303830
(43) Date de publication de la demande: 05.10.1994
(73) Titulaire: SOCIETE EUROPEENNE DE PROPULSION, 92150 Suresnes (FR)
(72) Inventeur: Arnold, Thibault, F-33110 Le Bouscat (FR); Lacombe, Alain, F-33600 Pessac (FR); Tual, Michel, F-33290 Blanquefort (FR)
(74) Mandataire: Joly, Jean-Jacques

(56) Documents cités:
- FR-A- 2 657 675
- GB-A- 530 144
- GB-A- 2 082 245
- US-A- 4 459 261

## Description

La présente invention concerne un dispositif de protection thermique plus particulièrement destiné à un engin aéronautique ou spatial, par exemple un corps de rentrée atmosphérique, un avion spatial, ou un avion hypersonique. Ce domaine d'application n'est pas exclusif, l'invention pouvant être aussi utilisée par exemple pour des fours thermiques sous air à très haute température.

Un dispositif de protection thermique pour un engin aérospatial doit protéger la structure interne de l'engin contre des échauffements, en particulier lors de rentrée dans l'atmosphère, tout en assurant une fonction aérodynamique.

A cet effet, il est connu de réaliser une protection thermique sous forme de tuiles ou modules élémentaires juxtaposés fixés sur une structure primaire interne de l'engin à protéger. Lorsque l'engin est réutilisable (avion spatial ou avion hypersonique), la fixation des modules doit être conçue pour autoriser le remplacement d'un module endommagé sans trop de difficultés.

Il est proposé dans le document FR-A-2 657 675 de réaliser une protection thermique pour un avion spatial au moyen de tuiles quadrangulaires juxtaposées. Chaque tuile comporte un élément de carénage en matériau composite à matrice céramique et un isolant thermique disposé à l'intérieur de l'élément de carénage. Celui-ci présente des pattes de fixation qui sont reliées à la structure primaire à protéger par pontets et vis. Le démontage d'une tuile est réalisé en faisant passer un outil par déformation de joints souples prévus entre tuiles adjacentes.

Cette solution connue autorise effectivement le remplacement d'une tuile endommagée depuis l'extérieur, mais présente quelques inconvénients.

Ainsi, il est nécessaire de prévoir un intervalle suffisamment grand entre tuiles voisines pour permettre le passage et la manoeuvre de l'outil nécessaire pour dévisser les moyens de liaison entre carénage et pontet de fixation solidaire de la structure primaire. En dépit du remplissage de cet intervalle par un joint, la fonction aérodynamique des tuiles juxtaposées et leur fonction de protection thermique peuvent s'en trouver affectées, et un endommagement des joints, notamment au montage, est d'autant plus néfaste vis-à-vis de ces deux fonctions.

En outre, il est nécessaire d'insérer des cales et rondelles dont l'épaisseur est ajustée à la demande entre les éléments de carénage, les pontets et la structure primaire, ceci pour corriger les inévitables défauts de forme de ces différentes parties et assurer la continuité de la forme aérodynamique de l'engin aérospatial, ce qui alourdit et rend plus complexe la protection thermique.

De plus, l'intervalle nécessaire au logement des moyens de fixation entre les éléments de carénage a une forme telle qu'il nécessite un joint dont la section droite a une forme trapézoïdale évolutive, qui est complexe à réaliser.

De plus encore, les différences de dilatation d'origine thermique entre les éléments de carénage et la structure primaire engendrent des contraintes mécaniques néfastes au niveau des fixations.

Il est par ailleurs connu du brevet US-A-4 459 261 une structure de support pour un réacteur à très haute température comprenant des organes de liaison entre la paroi en graphite du réacteur et un bouclier thermique latéral situé à l'extérieur du réacteur. Les organes de liaison sont constitués par des tiges élastiquement déformables s'étendant horizontalement dans l'intervalle entre la paroi du réacteur et le bouclier thermique auxquels elles sont reliées par des liaisons à rotules.

Une telle structure agit en compression sur la paroi du réacteur et permet d'accommoder des variations dimensionnelles tant horizontales que verticales.

Toutefois, il ne s'agit pas d'une construction modulaire permettant de démonter et remonter facilement une partie de paroi. De plus, il est nécessaire, au moins du côté de la paroi du réacteur, de prévoir une liaison à rotule capable de supporter des températures élevées. De plus encore, l'utilisation d'organes de liaison élastiques ne saurait être envisagée lorsque la structure extérieure doit être indéformable, ce qui est le cas en particulier pour un avion spatial en raison de la fonction aérodynamique que doivent assurer les éléments de protection thermique.

Aussi, la présente invention vise à proposer une protection thermique convenant particulièrement pour des engins aéronautiques ou spatiaux, et plus précisément une protection thermique sous forme de modules juxtaposés interchangeables qui ne présente pas les inconvénients de l'état de la technique évoqué plus haut.

Ce but est atteint grâce à un dispositif de protection thermique formé d'une pluralité de modules élémentaires juxtaposés comportant chacun un élément de carénage muni de pattes de fixation, un isolant thermique intégré à l'élément de carénage, et des moyens de liaison rigide pour relier de façon démontable les pattes de fixation à une structure primaire à protéger,
dispositif dans lequel, conformément à l'invention, l'intervalle entre éléments de carénage voisins est limité à une valeur sensiblement égale à la valeur minimale nécessaire pour absorber les dilatations thermiques des éléments de carénage, et les moyens de liaison rigide d'une patte de fixation d'un module à la structure primaire comprennent une rotule fixée à la patte de fixation de manière réglable et pouvant être bloquée à l'intérieur d'un logement correspondant d'une pièce de réception fixée à la structure primaire, la rotule étant bloquée dans son logement au moyen d'un doigt pouvant être libéré par une action exercée à l'encontre d'une force de rappel élastique produite par exemple par un ressort.

Il suffit alors d'agir sur le ressort pour libérer le doigt et autoriser l'introduction de la rotule dans son logement ou son extraction hors de celui-ci.

De préférence, le doigt de blocage est mobile dans une direction sensiblement perpendiculaire à la direction d'une force de rappel élastique exercée par le ressort, celui-ci agissant sur le doigt par l'intermédiaire d'une pièce sur une face de laquelle s'appuie le doigt. La pièce est par exemple en forme de coin ayant une face formant une rampe d'autoblocage sur laquelle s'appuie le doigt. De la sorte, la rotule ne peut se dégager élastiquement de son logement sous l'effet d'une traction exercée sur l'élément de carénage.

Selon un premier mode de réalisation du dispositif conforme à l'invention, le doigt de blocage de la rotule peut être libéré par un effort de traction exercé sur le ressort depuis l'extérieur de la protection thermique. Ceci peut être réalisé au moyen d'un fil disposé à demeure dans l'intervalle entre deux éléments de carénage de modules adjacents, ce fil étant de nature à supporter les conditions thermiques présentes dans l'intervalle.

Selon un deuxième mode de réalisation, la libération du doigt peut être effectuée par compression réalisée depuis l'extérieur au moyen d'un outil mince, en forme de lame, introduit dans l'intervalle entre deux éléments de carénage de modules adjacents.

En variante, il pourra être prévu d'accéder au ressort depuis l'intérieur de la structure primaire.

Dans tous les cas, l'intervalle entre éléments de carénage de modules adjacents peut être très faible, ce qui permet de le limiter à la valeur nécessaire pour la libre dilatation thermique des éléments de carénage. Ceux-ci peuvent donc assurer au mieux leurs fonctions aérodynamique et de protection thermique.

En outre, grâce à la liaison par rotule, les contraintes induites dans les pattes de fixation par les dilatations thermiques différentielles entre éléments de carénage et structure primaire sont moindres qu'avec l'arrangement de l'art antérieur du fait que la liaison avec la rotule présente un degré d'hyperstaticité plus faible.

La position de la rotule par rapport à la patte de fixation à laquelle elle est fixée peut être ajustée par exemple par vissage ou dévissage d'un support de la rotule autour d'un axe de celle-ci. Cette facilité de réglage permet de relâcher les tolérances de fabrication et d'assemblage de la structure primaire et des éléments de carénage tout en autorisant un ajustement de la position des éléments de carénage qui permet de s'approcher au plus près de la forme aérodynamique souhaitée.

De préférence, les éléments de carénage ont une face externe de forme polygonale, par exemple quadrangulaire, et les pattes de fixation sont situées aux milieux des côtés des éléments de carénage et s'étendent, vers l'intérieur, à l'opposé de la face externe. Par cette disposition, les différences de dilatation thermique entre les éléments de carénage et la structure primaire peuvent se traduire par des déformations élastiques des pattes de fixation qui induisent le moins de contraintes mécaniques néfastes.

L'invention sera mieux comprise à la lecture de la description faite ci-après, à titre indicatif mais non limitatif, en référence aux dessins annexés sur lesquels :
- la figure 1 est une vue générale partielle très schématique d'un dispositif de protection thermique ;
- la figure 2 est une vue schématique partielle en coupe et à échelle agrandie, selon le plan II de la figure 1, montrant un agencement d'un dispositif de protection thermique conforme à l'invention;
- la figure 3 est une vue en perspective d'un élément de carénage du dispositif de protection thermique de la figure 2;
- la figure 4 est une vue de détail montrant, à échelle agrandie, la partie d'extrémité d'une patte de fixation de l'élément de carénage de la figure 3;
- la figure 5 est une vue de détail en perspective illustrant une liaison à rotule entre une patte de fixation et la structure primaire à protéger;
- la figure 6 est une vue en coupe suivant le plan VI de la figure 5;
- les figures 7 et 8 sont des vues en coupe de variantes de réalisation de la liaison à rotule entre une patte de fixation et la structure primaire à protéger;
- la figure 9 est une vue en perspective d'un autre mode de réalisation d'un élément de carénage ; et
- la figure 10 est une vue en coupe d'une liaison à rotule entre une patte de fixation de l'élément de carénage de la figure 9 et la structure primaire à protéger.

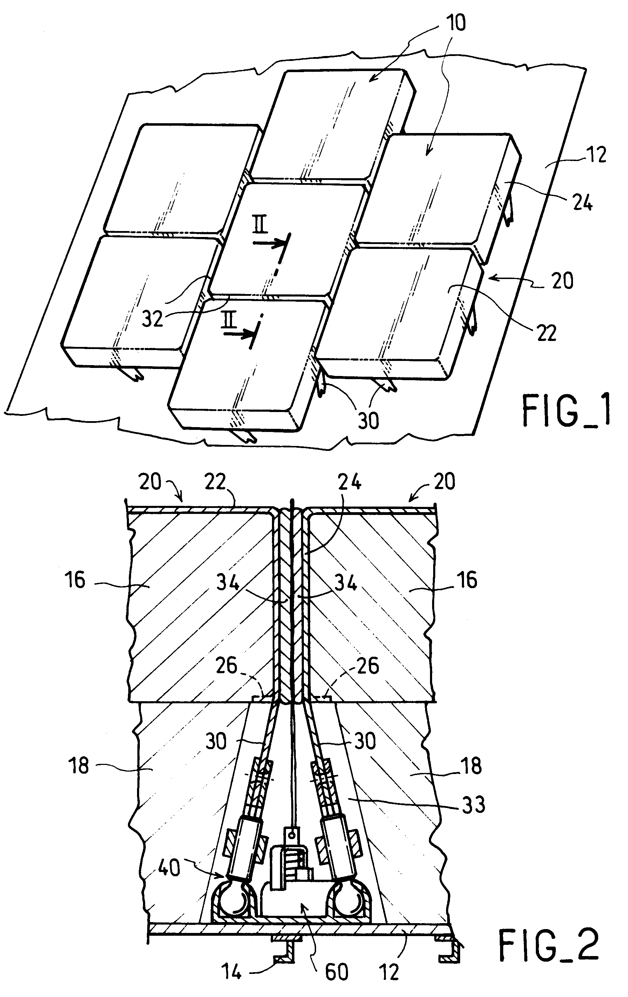

Comme le montrent les figures 1 et 2, un dispositif de protection thermique, par exemple pour un avion spatial ou hypersonique, est formé de modules élémentaires semblables 10 juxtaposés, disposés en mosaïque. Les modules sont fixés sur une structure primaire à protéger 12, en l'espèce une structure externe de l'avion équipée de raidisseurs 14.

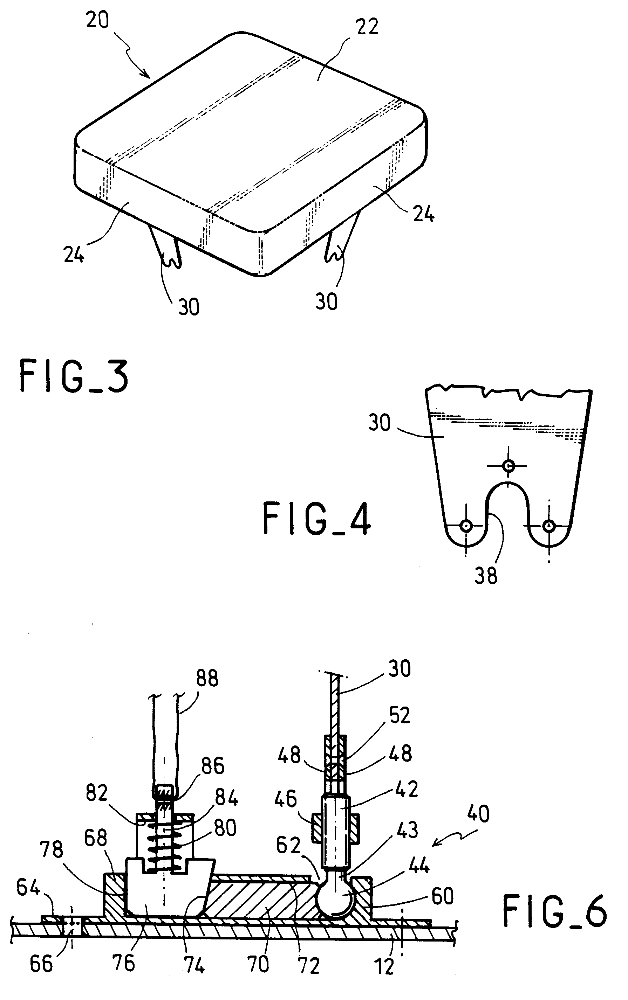

Chaque module élémentaire 10 comprend un élément de carénage 20 en forme de caisson ayant une face externe quadrangulaire 22, par exemple carrée, et des flancs 24 qui s'étendent perpendiculairement à la face 22 et dont les extrémités 26 sont repliées vers l'intérieur. Comme le montre plus nettement la figure 3, les flancs 24 sont prolongés en leurs milieux par des pattes de fixation 30 qui sont inclinées, vers l'intérieur du caisson, en faisant un angle de quelques degrés (environ 10°) par rapport à la normale à la face 22.

Les éléments de carénage 20 sont en un matériau capable de résister à des températures de service élevées, typiquement de l'ordre de 800 à 1 500°C pour un avion spatial. Ce matériau est par exemple un matériau composite à matrice céramique (CMC), tel qu'un matériau constitué par une texture de renfort fibreux en carbone densifiée par une matrice en carbure de silicium. Les techniques de fabrication des CMC sont bien connues. En l'espèce, le renfort fibreux peut être réalisé pour constituer une préforme par drapage de strates de texture bidimensionnelle ou multicouches sur un outillage afin de donner au renfort la forme du caisson 20. La densification de la préforme par la matrice céramique peut être réalisée par infiltration chimique en phase vapeur et/ou par imprégnation au moyen d'un précurseur liquide de la matrice et transformation du précurseur en céramique par traitement thermique.

Les dimensions des éléments de carénage, en ce qui concerne les faces 22, sont limitées, pour que la juxtaposition de celles-ci constitue une surface aux propriétés aérodynamiques souhaitées, tout en étant suffisamment grandes pour éviter la nécessité d'un grand nombre d'éléments de petites dimensions multipliant les problèmes d'assemblage et de fixation. Typiquement, les faces 22, pour une protection thermique d'avion spatial ou hypersonique, peuvent être des carrés de quelques dizaines de centimètres de côté. On notera en outre que des formes quelconques, autres que carrées, par exemple polygonales, pourront être adoptées pour les éléments de carénage, le nombre et la disposition des pattes de fixation étant adaptés en conséquence.

L'intérieur de chaque élément de carénage 20 est rempli d'un isolant thermique 16 (figure 2). Le matériau utilisé pour l'isolant 16 est un matériau de faible densité, par exemple un matériau constitué de feuilles céramiques munies d'un revêtement métallique réfléchissant, comme décrit dans les demandes de brevets français No 2 611 251 et 2 657 414, ou un feutre de fibres silico-alumineuses. Il est également possible de réaliser l'isolant sous forme d'un bloc rigide de céramique poreuse, par exemple un bloc de céramique de type silico-alumineux éventuellement renforcée de fibres courtes. Dans ce dernier cas, le bloc isolant peut être utilisé comme outillage pour la réalisation de la préforme de l'élément de carénage composite, comme décrit dans la demande de brevet français No 93 02 703 déposée le 9 mars 1993 par la demanderesse.

L'épaisseur de l'isolant 16 correspond à la largeur des flancs 24 de l'élément de carénage. La qualité de cet isolant est choisie en fonction des niveaux thermiques rencontrés. Pour l'application envisagée à un avion spatial ou hypersonique, et avec un isolant constitué par un feutre de fibres silico-alumineuses, une épaisseur de quelques centimètres, par exemple entre 2 et 10 cm, est souhaitable.

Des dispositifs de liaison à rotule 40 (non montrés sur la figure 1), décrits plus loin en détail, assurent la liaison entre les pattes de fixation 30 et la structure primaire 12. Dans l'exemple illustré, les pattes de fixation 30 sont dans le même matériau que l'élément de carénage 20 et réalisées en une seule pièce avec celui-ci. Si le niveau de température de service envisagé le permet, les pattes de fixation peuvent être constituées par des pièces métalliques rapportées, par exemple fixées par rivetage sur les flancs 24.

Les pattes de fixation 30 et les dispositifs de liaison 40 déterminent un intervalle entre les éléments de carénage 20 munis de l'isolant 16 et la structure primaire 12. Cet intervalle est rempli par un isolant 18, par exemple de même nature que l'isolant 16. L'isolant 18 peut être collé sur la structure primaire et son épaisseur est choisie pour assurer une fonction de sécurité en cas d'arrachage d'un élément de carénage.

Un intervalle 32 (figure 1) est ménagé entre flancs adjacents d'éléments de carénage voisins, uniquement pour tenir compte des variations dimensionnelles dues aux dilatations thermiques. L'intervalle 32 est garni d'un joint réalisé en un matériau non rigide tenant à haute température. On pourra utiliser un matériau identique à celui de l'isolant 16, par exemple un feutre ou un tissu de fibres silico-alumineuses. Un joint entre deux éléments de carénage est en fait formé de deux parties 34 collées respectivement sur les surfaces externes des flancs de ces deux éléments, par exemple par un collage céramique (figure 2).

Le joint ainsi réalisé occupe sensiblement tout le volume disponible entre les éléments de carénage. Il assure, d'une part, la continuité de la surface externe des éléments de carénage et, d'autre part, l'isolation thermique des dispositifs de liaison 40 par rapport à l'environnement extérieur. Un bourrage (non représenté) constitué par des fibres sous forme de feutre ou de voile de carde peut être réalisé dans l'espace 33 autour des pattes de fixation 30 et des dispositifs de liaison 40, afin d'éviter un passage de gaz chauds par effet de volume sous dépression et d'assurer la continuité de l'isolant 18.

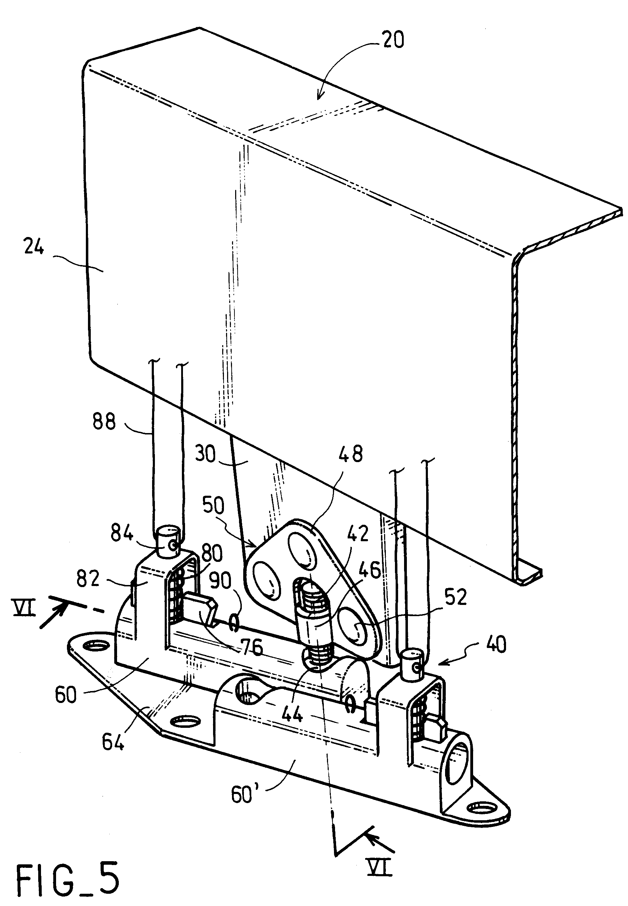

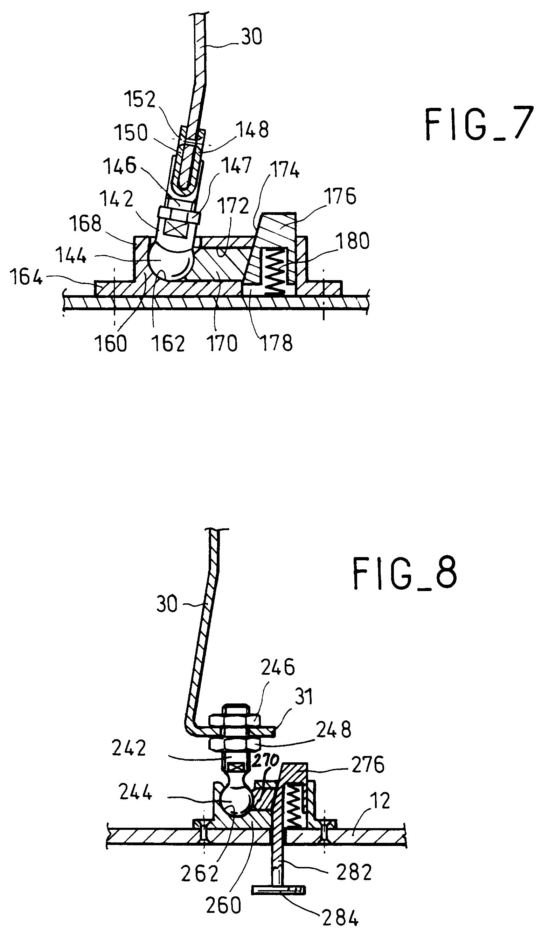

Un dispositif de liaison à rotule 40 est illustré plus en détail par les figures 5 et 6. Les pièces constitutives du dispositif de liaison sont des pièces métalliques.

Une tige filetée 42 munie d'une rotule 44 à une extrémité est vissée dans une bague 46. Celle-ci est réalisée en une seule pièce avec deux flasques 48 d'une pièce de support 50 fixée à l'extrémité de la patte de fixation 30. A cet effet, celle-ci présente une découpe centrale 38 à son extrémité (figure 4) permettant le logement de la bague 46, tandis que les flasques 48 enserrent l'extrémité de la patte de liaison 30 et sont fixés à celle-ci par des rivets 52.

La rotule 44 est reçue dans un logement 62 de forme correspondante d'une pièce de réception 60. Celle-ci comporte une embase 64 fixée sur la structure primaire par des rivets 66 et surmontée d'un corps 68 dans lequel le logement 62 est formé. Un doigt de retenue 70 peut coulisser dans un alésage 72 qui débouche latéralement dans le logement 62. Le doigt 70 a une extrémité concave en forme de calotte sphérique qui s'applique sur la rotule 44 en épousant la forme de celle-ci. A son autre extrémité, le doigt 70 prend appui sur une rampe 74 d'une pièce ou targette 76. Celle-ci peut coulisser dans un passage 78 formé dans la pièce 60 et est soumise à l'action d'un ressort 80. Ce dernier exerce sur la targette 76 une force de rappel qui, par l'intermédiaire de la rampe 74, tend à pousser le doigt 70 pour que celui-ci bloque la rotule 44 dans le logement 62; Cette disposition assure par effet de coin l'irréversibilité du blocage en l'absence d'action extérieure sur la targette 76. En effet, le doigt 70 étant mobile en translation perpendiculairement à l'action du ressort, la rotule 44 ne peut se dégager élastiquement par simple traction sur la tige 42.

La force de rappel exercée par le ressort 80 sur la targette 76 est dirigée vers l'intérieur, c'est-à-dire vers la structure primaire 12. Le ressort 80 prend appui sur un arceau 82 qui surmonte le corps 68. La targette 76 est munie d'un doigt 84 qui est entouré par le ressort 80 et fait saillie à son extrémité supérieure à travers un perçage formé dans l'arceau 82. L'extrémité supérieure du doigt 84 présente un trou 86 qui traverse le doigt transversalement de part en part et dans lequel passe un fil 88 formant une boucle. Celle-ci s'étend dans l'intervalle entre les modules adjacents, entres les deux parties du joint 34 de manière à être facilement accessible depuis l'extérieur de la protection thermique.

Un système de blocage de sécurité peut être prévu, par exemple en cas de défaillance du ressort 80, tel qu'une goupille à ressort 90 (uniquement montrée sur la figure 5) bloquant le doigt 70 en translation. Le retrait de la goupille peut être effectué au moyen d'un fil analogue au fil 88.

Le déblocage de la rotule 44 est réalisé par traction sur le doigt 84 de la targette 76 au moyen du fil 88 ou en engageant un crochet dans l'intervalle entre les deux parties du joint 34. La goupille de sécurité éventuellement présente a été préalablement retirée de la même façon. Cette traction peut aisément être exercée, depuis l'extérieur de la protection thermique, sans endommager le joint 34. La largeur de l'intervalle 32 entre éléments de carénage voisins est donc limitée à la valeur juste nécessaire pour absorber les dilatations thermiques, c'est-à-dire, pour l'application envisagée, environ 1 mm. Dans le mode de réalisation illustré par les figures 1 à 6, l'intervalle 32 a une largeur constante, ce qui simplifie la réalisation du joint 34. Celui-ci étant plat et fin, différents matériaux pourront être utilisés, par exemple de simples tissus. Dans certains cas, la faible largeur de l'intervalle 32 peut même conduire à envisager la suppression du joint 34.

A cet avantage s'ajoute celui de l'extrême simplicité du montage et du démontage d'un module de protection thermique. De plus, la présence des rotules aux extrémités de tiges filetées 42 engagées dans les bagues 46 permet, par vissage ou dévissage des tiges 42, de faire varier la distance entre les pattes de fixation et les rotules et d'ajuster précisément la position des éléments de carénage pour obtenir la forme aérodynamique souhaitée. Cette possibilité de réglage permet de compenser des défauts dimensionnels de la structure primaire, des éléments de carénage et des dispositifs de liaison, et d'accepter de plus grandes tolérances de fabrication pour ces différentes parties. Enfin, la présence d'une partie 43 de plus faible section entre la tige 42 et la rotule 44 limite fortement les transferts thermiques par conductivité entre les éléments de carénage et la structure primaire.

La disposition des éléments de carénage en quinconce (figure 1) fait que, sur deux côtés opposés, les pattes de fixation sont situées en regard de pattes de fixation des éléments voisins tandis que, sur les deux autres côtés, les pattes de fixation sont situées en regard d'intervalles entre éléments voisins.

Dans le premier cas, les dispositifs de liaison à rotule comprennent deux pièces de réception identiques 60, 60' montées tête-bêche sur une même embase 64, comme montré sur la figure 5.

Dans le deuxième cas, une seule pièce de réception est prévue.

Dans les deux cas, les dispositions des pièces de réception sont telles que des doigts de manoeuvre, tel que le doigt 84, sont disposés sensiblement à l'aplomb de l'intervalle entre deux parties de joint 34, le fil 88 s'étendant donc sensiblement perpendiculairement à la structure primaire.

Les figures 7 et 8 illustrent des variantes de réalisation de la liaison à rotule.

Dans le cas de la figure 7, la rotule 144 est fixée à une extrémité d'un manchon creux 142 vissé sur une tige filetée 146 et bloqué en position sur la tige au moyen d'un écrou 147. La tige est solidaire d'une pièce de support 150 présentant deux flasques 148 qui enserrent l'extrémité de la patte de fixation 30 et sont fixés à celle-ci par des rivets 152.

La rotule 144 est reçue dans un logement 162 de forme correspondante d'une pièce de réception 160. Celle-ci comporte une embase 164 fixée sur la structure primaire par des rivets et surmontée d'un corps 168 dans lequel le logement 162 est formé. Un doigt de retenue 170 (analogue au doigt 70 de la figure 6) peut coulisser dans un alésage 172 qui débouche dans le logement 162. A son extrémité opposée à celle qui s'applique sur la rotule 144, le doigt 170 prend appui sur une rampe 174 d'une targette 176. Celle-ci peut coulisser dans un passage 178 formé dans la pièce 160 et est soumise à l'action d'un ressort 180. Celui-ci exerce sur la targette 176 une force de rappel qui, par l'intermédiaire de la rampe 174, tend à pousser le doigt 170 pour que celui-ci bloque la rotule 144 dans son logement.

Un effet de blocage par coin est ainsi obtenu, comme dans le mode de réalisation des figures 5 et 6 mais la rampe 144 est inclinée dans l'autre sens par rapport à la rampe 44 et la force de rappel exercée par le ressort 180 sur la targette 176 est dirigée vers l'extérieur par rapport à la structure primaire.

Aussi, le déblocage de la rotule est réalisé non pas par traction, mais par pression sur l'extrémité de la targette 176 qui fait saillie à la partie supérieure du corps 168. De même, une pression sur la targette 176 permet d'engager la rotule 144 dans le logement 162 en repoussant le doigt 170. Cette pression peut être exercée, depuis l'extérieur de la protection thermique, au moyen d'un outil mince, par exemple en forme de lame engagé entre les deux parties du joint 34. Là encore, l'intervalle entre les éléments de carénage a une largeur égale à la valeur minimale requise pour absorber les dilatations thermiques. La disposition de la pièce de réception 160 est choisie pour que la partie supérieure de la targette 176 se situe à l'aplomb du milieu de l'intervalle entre les éléments de carénage voisins.

Dans le cas de la figure 8, la patte de fixation 30 a son extrémité repliée à angle droit, pour cet exemple, vers l'extérieur pour former un rebord 31. La rotule 244 est située à une extrémité d'une tige filetée 242 dont l'autre extrémité passe à travers un perçage pratiqué dans le rebord 31. La tige 242 est bloquée par rapport à la patte de fixation au moyen de deux écrous 246, 248 situés de part et d'autre du rebord 31.

La rotule 244 est engagée dans un logement 262 d'une pièce de réception 260 analogue à celle illustrée par la figure 7, la seule différence résidant dans le fait que la targette 276 est prolongée à sa partie inférieure par une tige de manoeuvre 282 qui passe à travers un passage formé dans la structure primaire 12 et se termine par un bouton 284.

Dans ce cas, la manoeuvre de la targette 276, pour débloquer le doigt 270 qui agit sur la rotule 244, consiste en une traction exercée sur le bouton 284 depuis l'intérieur de la structure primaire 12. Aucun outillage n'est nécessaire pour accéder à la targette 276 depuis l'extérieur de la protection thermique.

On notera que la manoeuvre pourrait aussi être réalisée depuis l'intérieur de la structure primaire non pas par traction mais par pression, en utilisant un dispositif de liaison du type de celui des figures 5 et 6.

Dans les modes de réalisation des figures 7 et 8, comme dans celui des figures 5 et 6, la distance entre la rotule et la patte de fixation est réglable par vissage ou dévissage afin d'ajuster la position de l'élément de carénage.

L'élément de carénage 20 de la figure 3 est muni de pattes de fixation situées aux milieux des côtés. Cette disposition permet de minimiser, au niveau des pattes de fixation, les contraintes mécaniques néfastes résultant des différences de dilatation thermique entre élément de carénage et structure primaire.

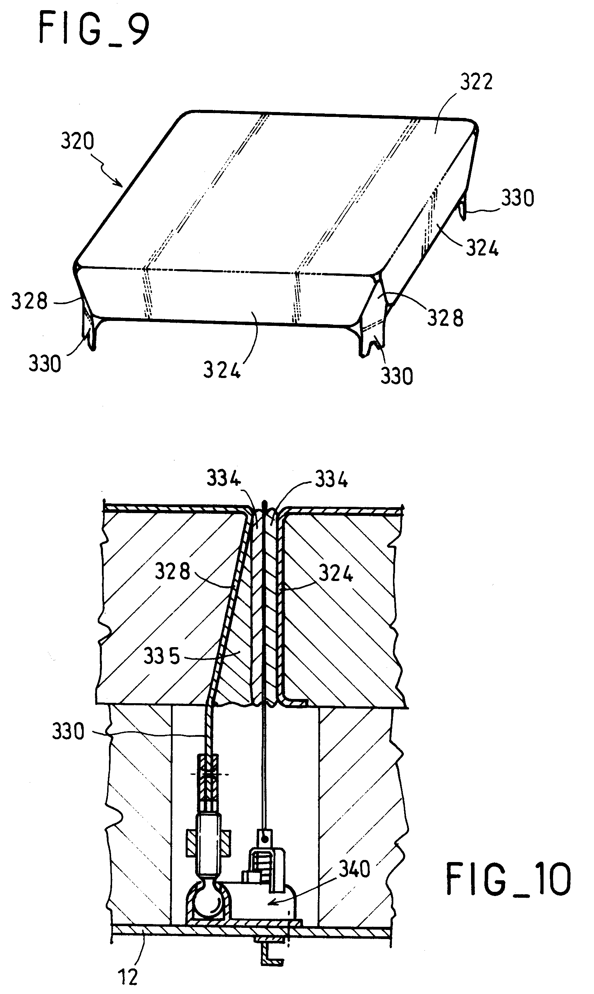

Il est toutefois envisageable de disposer les pattes de fixation au niveau des angles de l'élément de carénage, comme montré par les figures 9 et 10. L'élément de carénage 320 a une forme de caisson avec une face externe 322 sensiblement carrée et des flancs 324 dont l'extrémité est repliée vers l'intérieur. Les flancs 324 sont raccordés les uns aux autres aux angles du caisson 320 par des surfaces planes formant des pans coupés 328 qui sont inclinés, vers l'intérieur du caisson, en faisant un angle de quelques degrés (environ 10°) par rapport à la face 322. Au-delà des flancs 324, les pans coupés 328 sont prolongés par des pattes de fixation 330 qui s'étendent perpendiculairement à la face 322. Les orientations des pattes de fixation 330 sont telles qu'elles sont perpendiculaires aux plans normaux à la face 322 contenant les diagonales de celle-ci.

La présence des pans coupés 328 dans les angles de l'élément de carénage peut conduire à la nécessité, dans ces angles, de compléter le joint 334 d'épaisseur uniforme par un bourrage d'angle 335.

La liaison entre une patte de fixation 330 et la structure primaire 12 est assurée par un dispositif de liaison à rotule 340 par exemple analogue à celui des figures 5 et 6.

## Revendications

1. Dispositif de protection thermique, notamment pour engin aéronautique ou spatial, formé d'une pluralité de modules élémentaires juxtaposés (10) comportant chacun un élément de carénage (20 ; 320) muni de pattes de fixation (30 ; 330), un isolant thermique (16) intégré à l'élément de carénage, et des moyens de liaison rigide (40 ; 340) pour relier de façon démontable les pattes de fixation à une structure primaire à protéger (12),
caractérisé en ce que l'intervalle entre éléments de carénage voisins (20 ; 320) est limité à une valeur sensiblement égale à la valeur minimale nécessaire pour absorber les dilatations thermiques des éléments de carénage, et les moyens de liaison rigide d'une patte de fixation (30; 330) d'un module à la structure primaire comprennent une rotule (44; 144 ; 244) fixée à la patte de fixation de manière réglable et pouvant être bloquée à l'intérieur d'un logement correspondant (62; 162; 262) d'une pièce de réception (60; 160 ; 260) fixée à la structure primaire (12), le blocage de la rotule (44; 144 ; 244) dans son logement étant réalisé au moyen d'un doigt (70; 170 ; 270) pouvant être libéré par une action exercée à l'encontre d'une force de rappel élastique.

2. Dispositif selon la revendication 1, caractérisé en ce que le doigt de blocage (70; 170 ; 270) est mobile dans une direction sensiblement perpendiculaire à la direction de la force de rappel élastique, celle-ci s'exerçant sur une pièce (76; 176; 276) présentant une face formant une rampe d'autoblocage sur laquelle s'appuie le doigt de blocage.

3. Dispositif selon la revendication 2, caractérisé en ce que la libération du doigt de blocage (70) est réalisée par traction sur ladite pièce (76) depuis l'extérieur du dispositif de protection thermique à travers un intervalle entre modules élémentaires voisins.

4. Dispositif selon la revendication 3, caractérisé en ce que la traction est exercée au moyen d'un fil (88) fixé à demeure à ladite pièce (76) et s'étendant dans ledit intervalle.

5. Dispositif selon la revendication 2, caractérisé en ce que la libération du doigt de blocage (170) est réalisée par pression sur ladite pièce (176) depuis l'extérieur du dispositif de protection thermique à travers un intervalle entre modules élémentaires voisins.

6. Dispositif selon la revendication 2, caractérisé en ce que la libération du doigt de blocage (270) est réalisée par action sur ladite pièce (276) depuis l'intérieur de la structure primaire (12).

7. Dispositif selon l'une quelconque des revendications 1 à 6, caractérisé en ce que la rotule (44 ; 144 ; 244) est fixée à la patte de fixation (30) de manière réglable par vissage ou dévissage d'une pièce portant la rotule permettant de faire varier la distance entre la patte de fixation et la rotule afin d'ajuster la position de l'élément de carénage en fonction d'une forme aérodynamique souhaitée indépendamment de défauts dimensionnels de l'élément de carénage, de la structure primaire et des moyens de liaison.

8. Dispositif selon l'une quelconque des revendications 1 à 7, caractérisé en ce que les éléments de carénage (20) ont une forme de caisson avec une face externe (22 ; 322) et des flancs (24 ; 324) perpendiculaires à la face externe.

9. Dispositif selon l'une quelconque des revendications 1 à 8, caractérisé en ce que les éléments de carénage (20) ont une face externe (22) polygonale et les pattes de fixation (30) sont situées aux milieux des côtés des éléments de carénage.

10. Dispositif selon l'une quelconque des revendications 1 à 8, caractérisé en ce que les éléments de carénage (320) ont une face externe quadrangulaire et les pattes de fixation (330) sont situées aux angles des éléments de carénage et s'étendent, à l'opposé de la face externe, en étant perpendiculaires aux plans normaux à la face externe contenant les diagonales de celle-ci.

## Claims

1. A thermal protection device, in particular for an aircraft or a space vehicle, the device comprising a plurality of juxtaposed unit modules (10) each comprising a fairing element (20; 320) provided with fixing tabs (30; 330), a thermal insulator (16) integrated in the fairing element, and rigid connection means (40; 340) for releasably connecting the fixing tabs to a primary structure that is to be protected (12),
the device being characterized in that the gap between neighboring fairing elements (20; 320) is limited to a value substantially equal to the minimum value necessary for accommodating thermal expansion of the fairing elements, and the rigid connection means for connecting a fixing tab (30; 330) of a module to the primary structure comprise a ball (44; 144; 244) fixed to the fixing tab in adjustable manner and capable of being locked inside a corresponding socket (62; 162; 262) of a retaining part (60; 160; 260) fixed to the primary structure (12), the ball (44; 144; 244) being locked in its socket by means of a finger (70; 170; 270) capable of being released by action exerted against a resilient return force.

2. The device according to claim 1, characterized in that the locking finger (70; 170; 270) is movable in a direction substantially perpendicular to the direction of the resilient return force, which force acts on a part (76; 176; 276) having a face that forms a self-locking ramp against which the locking finger bears.

3. The device according to claim 2, characterized in that the locking finger (70) is released by applying traction on said part (76) from outside the thermal protection device through a gap between neighboring unit modules.

4. The device according to claim 3, characterized in that the traction is exerted by means of a wire (88) permanently fixed to said part (76) and extending through said gap.

5. The device according to claim 2, characterized in that the locking finger (170) is released by applying thrust on said part (176) from outside the thermal protection device through a gap between neighboring unit modules.

6. The device according to claim 2, characterized in that the locking finger (270) is released by acting on said part (276) from inside the primary structure (12).

7. The device according to any one of claims 1 to 6, characterized in that the ball (44; 144; 244) is fixed to the fixing tab (30) in a manner that is adjustable by screwing or unscrewing a part carrying the ball, thereby enabling the distance between the fixing tab and the ball to be varied so as to adjust the position of the fairing element as a function of the desired aerodynamic shape independently of dimensional faults in the fairing element, in the primary structure, and in the connection means.

8. The device according to any one of claims 1 to 7, characterized in that each fairing element (20) is in the form of an open box having an outside face (22; 322) and flanks (24; 324) perpendicular to the outside face.

9. The device according to any one of claims 1 to 8, characterized in that each fairing element (20) has a polygonal outside face (22) and the fixing tabs (30) are situated in the middles of the sides of the fairing elements.

10. The device according to any one of claims 1 to 8, characterized in that the each element (320) has a four-edged outside face and the fixing tabs (330) are situated in the corners of the fairing elements and extend away from the outside face, being perpendicular to planes that are normal to the outside face and that contain the diagonals thereof.

## Patentansprüche

1. Wärmeschutzvorrichtung, insbesondere für Luft- und Raumfahrzeuge, gebildet aus einer Mehrzahl von nebeneinander liegenden Elementarmodulen (10), die jeweils ein Verkleidungselement (20; 320) mit Fixierklauen (30; 330), in das Wärmeisolierstoff (16) integriert ist, aufweisen, und starte Verbindungsmittel (40; 340) zum lösbaren Verbinden der Fixierklauen an einer zu schützenden Hauptstruktur (12),
dadurch gekennzeichnet, daß die Lücke zwischen benachbarten Verkleidungselementen (20; 320) begrenzt ist auf einen Wert, der etwa dem kleinsten Wert entspricht, der benötigt wird, um Wärmedehnungen der Verkleidungselemente aufzunehmen, und daß die starten Verbindungsmittel zum Verbinden einer Fixierklaue (30; 330) eines Elementarmoduls mit der Hauptstruktur einen Kugelkopf (44; 144; 244) aufweisen, der an der Fixierklaue verstellbar befestigt ist und im Inneren einer enstprechenden Ausnehmung (62, 162, 262) eines an der Hauptstruktur (12) fixierten Aufnahmeteils (60, 160, 260) artetiert ist, wobei die Artetierung des Kugelkopfs (44; 144; 244) in seiner Ausnehmung mittels eines Zapfens (70; 170; 270) erfolgt, der durch eine gegen eine elastische Rückstellkraft ausgeübte Einwirkung lösbar ist.

2. Vorrichtung nach Anspruch 1, dadurch gekennzeichnet, daß der Arretierzapfen (70; 170; 270) in einer Richtung etwa senkrecht zu der elastischen Rückstellkraft beweglich ist, wobei diese auf ein Glied (76; 176; 276) einwirkt, welches eine selbstsperrende Rampenfläche aufweist, an der der Arretierzapfen anliegt.

3. Vorrichtung nach Anspruch 2, dadurch gekennzeichnet, daß das Lösen des Artetierzapfens (70) durch Ausüben von Zug auf das Glied (76) von außerhalb der Wärmeschutzvorrichtung durch eine Lücke zwischen benachbarten Elementarmodulen hindurch erfolgt.

4. Vorrichtung nach Anspruch 3, dadurch gekennzeichnet, daß der Zug mit Hilfe eines Drahts (88) ausgeübt wird, der dauerhaft an dem Glied (76) fixiert ist und sich durch die Lücke hindurch erstreckt.

5. Vorrichtung nach Anspruch 2, dadurch gekennzeichnet, daß das Lösen des Arretierzapfens (170) realisiert wird durch Druck auf das Glied (76) von außerhalb der Wärmeschutzvorrichtung durch eine Lücke zwischen benachbarten Elementarmodulen hindurch.

6. Vorrichtung nach Anspruch 2, dadurch gekennzeichnet, daß das Lösen des Arretierzapfens (370) erreicht wird durch Einwirkung auf das Glied (276) von der Innenseite der Hauptstruktur (12) her.

7. Vorrichtung nach einem der Ansprüche 1 bis 6, dadurch gekennzeichnet, daß der Kugelkopf (44; 144; 244) an der Fixierklaue (30) verstellbar fixiert ist durch Festschrauben oder Losschrauben eines Teils, welches den Kugelkopf trägt, um den Abstand zwischen der Fixierklaue und dem Kugelkopf so zu variieren, daß die Stellung des Verkleidungselements als Funktion einer gewünschten aerodynamischen Form unabhängig von Bemessungsfehlern des Verkleidungselements, der Hauptstruktur und der Verbindungsmittel eingestellt wird.

8. Vorrichtung nach einem der Ansprüche 1 bis 7, dadurch gekennzeichnet, daß die Verkleidungselemente (20) die Form einer Kassette mit einer Außenfläche (22; 322) und Seitenwänden (24; 324) senkrecht zu der Außenfläche aufweisen.

9. Vorrichtung nach einem der Ansprüche 1 bis 8, dadurch gekennzeichnet, daß die Verkleidungselemente (20) eine polygonale Außenfläche aufweisen, wobei die Fixierklauen (30) in den Mitten der Seiten der Verkleidungselemente angeordnet sind.

10. Vorrichtung nach einem der Ansprüche 1 bis 8, dadurch gekennzeichnet, daß die Verkleidungselemente (320) eine quadratische Außenfläche aufweisen, wobei die Fixierklauen (330) sich an den Winkeln der Verkleidungselemente befinden und sich entgegen der Außenfläche senkrecht zu den Ebenen erstrecken, die senkrecht zu der Außenfläche verlaufen und deren Diagonalen enthalten.
